# EUROPEAN PATENT SPECIFICATION

(11) **EP 1 546 274 B1**
(45) Date of publication and mention of the grant of the patent: **09.04.2008**
(21) Application number: 03767008.0
(22) Date of filing: 31.07.2003
(51) Int. Cl.: C09J 5/00, B29C 70/24, B29C 65/00

(54) **Z-PIN CLOSEOUT JOINT AND METHOD OF ASSEMBLY**
Z-VERSCHLUSS UND VERFAHREN ZUR DESSEN MONTAGE
JOINT DE FERMETURE COMPRENANT DES BROCHES EN Z ET SON PROCEDE D'ASSSEMBLAGE

(30) Priority: 05.08.2002 US 212339
(43) Date of publication of application: 29.06.2005
(73) Proprietor: Lockheed Martin Corporation, Bethesda, MD 20817 (US)
(72) Inventor: BERSUCH, Larry, R., Forth Worth, TX 76134 (US); SHEAHEN, Patrick, D., Fort Worth, TX 76137 (US)
(74) Representative: Collingwood, Anthony Robert
(86) International application number: PCT/US2003/023938
(87) International publication number: WO 2004/013243

(56) References cited:
- WO-A-02/066235
- WO-A-03/004576
- US-A- 5 876 540

## Description

### BACKGROUND OF THE INVENTION

### 1. Field of the Invention

This invention generally relates to assembly of components using woven preforms and particularly relates to assembly of components in closeout joints using adhesive-infused preforms.

### 2. Description of the Prior Art

Closeout panels can present problems for manufacturers, in that panels may attach to a substructure without access to the backside of the panel. In the past, these panels have been bolted to the substructure or attached using blind fasteners, such as pull rivets. These methods require expensive and time-consuming drilling and fastening operations and may weaken the structure. More recently, these panels have been co-bonded or secondarily bonded using resin or a thin layer of adhesive.

Typically, laminating resins are used as the matrix material in woven textiles, this also being true for woven preforms used to connect components made of composites or other materials. An example of a commonly used laminating resin is 977-3, available from Cytec Industries, Inc., of West Paterson, NJ. The laminating resin is infused into a textile product and is cured to form a polymer matrix in the finished composite component. When assembling a typical joint using a preform, the preform may be co-cured along with uncured composite components or the components may be cured prior to assembly using an uncured preform. Because of the inferior bonding characteristics of laminating resins, a thin layer of adhesive is often placed between the preform and the components. Generally, an adhesive film is used, which is expensive and adds to fabrication time.

To achieve proper bonding when using a thin layer of adhesive, such as an adhesive film, between pre-cured components, special attention must be paid to the interface at the adhesive layer. This bond line is critical, and, where two surfaces are brought together, the distance between the surfaces must be within a critical tolerance to ensure a proper bonding layer. The thickness of the adhesives is usually about 0.038cm (0.015") thick with a bond layer tolerance of +/- 0.013cm (0.005"). Methods for ensuring proper bonding may include tools, such as molds or vacuum bags, but particular applications may prevent the use of tools due to the inaccessibility of one or both sides of the joint. An example of this type of application is a closeout panel, such as the skin of a wing being bonded to an internal spar.

Z-pins have been used in joints connecting two composite, laminate components in the prior art. For example, U.S. Pat. Nos. 5,863,635, 5,968,639, and 5,980,665 to Childress discloses inserting z-pins into a first composite component to form stubble at a bonding face, then curing the first component An uncured second component is then bonded to the first component with the stubble extending into and among the fibers of the second component and through the bond line.

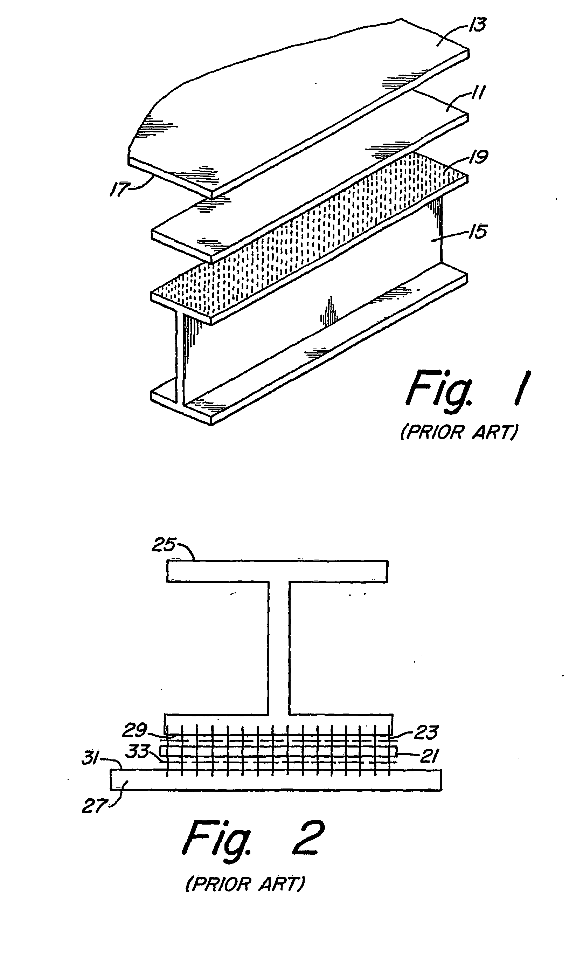

As shown in FIG. 1 and in the '635, '639, and '665 patents, an additional prior-art method includes inserting a padup strip 11 between two cured components 13, 15. Components 13, 15 are generally formed of plies of woven or unidirectional fibers and a resin matrix and are cured with a Z-pin stubble extending from surfaces 17, 19. Padup strip 11, which is typically formed of the same materials as components 13, 15 or formed of a pure adhesive material without fiber reinforcement, is uncured during assembly. Components are assembled with padup strip 11 between surfaces 17, 19, the z-pin stubble fields extending into padup strip 11. The resin in padup strip 11 is then cured to co-bond the components 13, 15 to padup strip 11.

An alternative method of assembly using z-pins is disclosed in U.S. Pat. Nos. 5,876,540, 5,876,832, 5,935,698 to Pannell and shown in FIG. 2. A pre-cured strip 21 is formed of a plurality of plies of fibers and a resin matrix, a plurality of z-pins 23 extending from opposite sides of strip 21. Components 25, 27 are also formed of composites and may be cured or partially cured. To assemble partially cured components 25, 27, strip 21 is positioned between components 25, 27, then z-pins 23 are inserted into adjacent surfaces 29, 31. The resin in components 25, 27 is cured to co-bond surfaces 29, 31 and to retain z-pins 23 within components 25, 27. Alternatively, if components 25, 27 are pre-cured, padup strips 33 are used between strip 21 and surfaces 29, 31. Padup strips 33, like padup strip 11 in FIG. 1, are typically formed of the same materials as components 25, 27 or formed of a pure adhesive material without fiber reinforcement.

Several applications pending at the time of filing are related to the present invention. US 6,835,261 and WO 03/057452 filed July 2,2001 and December 21, 2001 respectively, disclose adhesive-infused preforms and methods of joint assembly, the joints lacking z-pin reinforcement. WO 03/020496, filed August 31 2001 and US 6,821,368, filed October 9, 2001, disclose z-pin reinforced joints and methods of assembly using resin-infused preforms formed from a three-dimensional weave pattern.

A need exists for a method that reduces the steps in assembly and provides for a strong joint when joining components using a woven preform. A further need exists for a method of joining components in a structural joint that provides for a larger dimensional tolerance between components when using an adhesive at the bond line.

### SUMMARY OF THE INVENTION,

The invention provides a method according to claim 1 for bonding a first component to a second component, and a structural joint according to claim 11. Preferred aspects of the invention are detailed in the dependent claims.

A method uses a three-dimensional, adhesive-infused, woven preform to assemble two components, each component having z-pins extending from bonding surfaces. The components and preform are assembled with surfaces of the preform contacting surfaces of the components, the z-pins penetrating into the preform. The adhesive in the preform is then cured, adhering the preform to the components and retaining the z-pins within the preform. The adhesive may be cured at room temperature or through heat applied to the outer component Alternatively, an electron-beam may be used to cure the adhesive. Use of z-pins in the bond area and an adhesive, instead of a resin, creates a stronger joint, especially with fiber-reinforcement of the adhesive. The thickness of the compressible, three-dimensional weave provides for a larger dimensional tolerance at each bond line.

### BRIEF DESCRIPTION OF THE DRAWINGS

The novel features believed to be characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings.

Figure 1 is an exploded, perspective view of a prior-art assembly using a padup strip and components having z-pin stubble.

Figure 2 is a front view of a prior-art assembly formed using a pre-cured strip to connect components, the pre-cured strip having z-pins extending from opposite sides.

Figure 3 is an exploded, front view of an assembly of the present invention.

Figure 4 is an exploded, front view of a second embodiment of an assembly of the present invention.

### DETAILED DESCRIPTION OF THE INVENTION

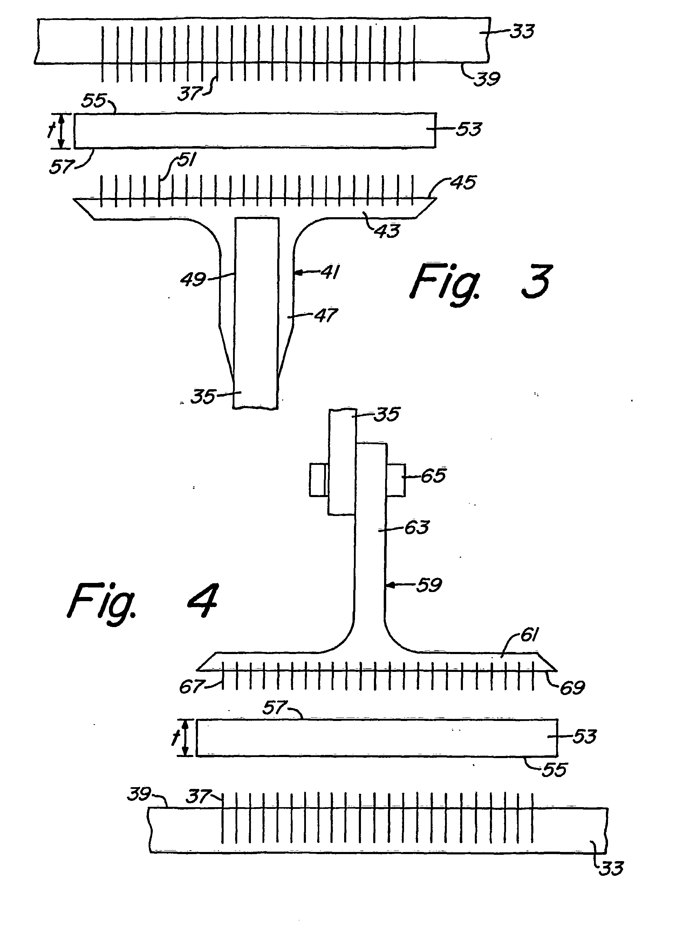

FIGS. 3 and 4 illustrate preferred embodiments of assemblies using an adhesive-infused, three-dimensional (3-D), woven textile preform used for assembling parts into structural joints. The preferred adhesive is FM® 300, also available from Cytec Industries, Inc., but other adhesives will work, providing the adhesive can be infused in a way that properly "wets out," or saturates, the fiber bundles in the preform.

Various resin systems are sold under the terms "laminating resins" and "adhesives," though there is no "bright-line," industry-standard definition by which to distinguish one from the other. The term "adhesive," as used herein, is meant as a resin system that has a lower modulus of elasticity and/or a higher strain-to-failure than the resin forming the matrix of the parts to be adhered. The combination of these characteristics is described as higher toughness, and adhesives have a higher toughness than laminating resins, which tend to be more brittle and have lower crack-formation loads.

Results from ASTM tests can be used to distinguish, generally, between laminating resins and adhesives. High-strength, structural laminating resins have a peel strength rating generally ranging up to 288kg/linear cm (15 pounds per linear inch), whereas the peel strength of adhesives are greater than 2.68kg/linear cm (15 pounds per linear inch). For example, the Bell Peel test (ASTM D3167 "Standard Test Method for Floating Roller Peel Resistance of Adhesives') shows that the peel strength of FM® 300 adhesive is 4.11-5.18kg/linear cm (23-29 pounds per linear inch) at room temperature, but the peel strength of 977-3 laminating resin, which is used to laminate the parts, is up to 1.07 kg/linear cm (6 pounds per linear inch). In addition, laminating resins generally have a tensile strength greater than 51.71 MPa (7500 pounds per square inch (psi))as tested using ASTM D638 ("Standard Test Method for Tensile Properties of Plastics"), with high-strength resins ranging to 82·74 MPa (12000 psi). Adhesives generally have tensile strengths less than 44.82 MPa (6500 psi). Thus, in the present application, "adhesives" also means resin systems with tensile strengths less than 44·82 MPa (6500 psi) and a peel strength greater than 2·68 Kg/linear cm (15 pounds per linear inch). "Laminating resins" is used to mean resin systems having tensile strengths greater than 51·71 MPa (7500 psi) and a peel strength of less than 2·68 Kg/linear cm (15 pounds per linear inch).

To provide higher strain-to-failure characteristics, epoxy-based adhesives usually have rubber modifiers added to them. The higher strain capability improves load distribution through the preform, reducing the crack formation at the outer edges of the bond lines and in the weave that can lead to catastrophic failure of the joint at loads less than those which would cause failure of the parts. Also, adhesives usually have a higher viscosity than laminating resins. Laminating resins easily saturate woven components, whereas adhesives require an infusion process to wet-out the fiber bundles.

The preforms can be infused with adhesive in many ways. For example, one method is by hot-melt infusion, in which adhesive films are laid adjacent to the preform, and heat is applied to cause adhesive to wick into preform. Another method involves drawing preforms through a tank containing adhesive dissolved in a solvent, usually acetone or toluene. The preforms are immersed in the solution, then removed from the tank. The solvent is allowed to evaporate, or "flash off," leaving the adhesive in the preform. To completely wet-out the preforms, this process may be repeated several times. The preform is saturated with the adhesive and is laid up while uncured. The parts, or components, to be joined may be formed from cured or partially cured composites or may be formed from other materials, e.g., plastics, metals, etc. Additional methods of infusion include resin-transfer molding (RTM) and vacuum-assist resin-transfer molding (VARTM).

Referring to the figures, FIG. 3 shows an exploded assembly for connecting components 33, 35, such as planar closeout panel 33, which may be, for example, an outer skin of an aircraft wing, and planar spar 35. Panel 33 is a cured, fiber-reinforced composite having a plurality of z-pins 37 inserted, through bonding surface 39 prior to curing of panel 33. Z-pins 37 are inserted using any appropriate technique and are arranged in a selected pattern, z-pins 37 preferably being normal to surface 39. The number of z-pins 37 is selected to provide a desired areal density of z-pins 37 relative to the area of surface 39. Curing of panel 33 affixes z-pins 37 in the matrix of panel 33. Spar 35 may be formed of any rigid material, such as composites or metal.

A cured, pi-shaped, woven preform 41 is bonded to spar 35, preform being woven from fibers using a three-dimensional (3-D) weave pattern. Preform 41 preferably has a matrix formed from laminating resin. Preform 41 has a base 43 having a continuous bonding surface 45, and a pair of spaced-apart legs 47 extend vertically from base 43. Each leg 47 is at a position that is offset from, but near to, the center of base 43. In this embodiment, legs 47 are parallel to each other and generally perpendicular to base 43. In the installed position, the inner surfaces of legs 47 face each other to form a slot 49 for receiving spar 35. A plurality of z-pins 51 are inserted into base 43 through bonding surface 45 prior to curing of preform 41. The pattern and areal density of z-pins 51 are preferably approximately the same as those for z-pins 37 in panel 33. Preform 41 may be secondarily bonded to spar 35 after curing of preform 41 or may be co-bonded to spar 35. Alternatively, if spar 35 is formed from composites, spar 35 and preform 41 may be co-cured.

An adhesive-infused, woven preform 53 has a rectangular cross-section and opposed bonding surfaces 55, 57 and is woven using a 3-D weave pattern to have a selected thickness t. Preform 53 is used to connect panel 33 to preform 41 by bonding surface 39 of panel 33 to surface 55 and surface 45 of preform 41 to surface 57. Preform 53 preferably has at least two warp-fiber layers and thickness t of 0.13cm (0.050") or may have additional layers, providing an increased thickness t.

As surfaces 39, 55 and 45, 57 are moved toward each other, Z-pins 37, 51 penetrate preform 53 until surfaces 39, 55 and 45, 57 contact each other, the length of z-pins 37, 51 being less than thickness t of preform 53. Bond layers form at the interfaces of surfaces 39, 55 and 45, 57, connecting panel 33 to preform 41, which is bonded to spar 35. Because the adhesive is infused in preform 53 having selected thickness t, the bond layer dimensional tolerance is increased, preform 53 allowing for a larger variation in distance between surfaces 39, 45. Without preform 53, the distance between surfaces 39, 45 must be within a critical tolerance to ensure a proper bonding layer. Additionally, use of preform 53 allows for some misalignment of panel 33 in relation to preform 41 when bonding and can accommodate dimensional variations in surfaces 39, 45.

Mechanical pressure is all that is required to push panel 33 towards preform 41 during curing, compressing preform 53 and ensuring continuous bondlines between surfaces 39, 55 and 45, 57. If the adhesive is a heat-cured adhesive, heat is applied to the outer surface of panel 33 to cause the rapid curing of the adhesive. Alternatively, adhesives used in preform 53 may be cured by other types of cure mechanisms, for example, electron-beam curing.

During assembly, panel 33 and preform 41 are fabricated to desired dimensions and shapes, then z-pins 37, S1 are inserted prior to curing of panel 33 and preform 41. Preform 41 may be bonded to spar 35 during or after curing of preform 41. Preform 53 is fabricated to have a selected thickness t, then infused with an adhesive. Preform 53 is positioned between panel 33 and base 43 of preform 41, then panel 33 is moved toward preform 41, with z-pins 37, 51 penetrating preform 53. Panel 33 is moved toward preform 41 until surface 39 contacts surface 55 of preform 53 and surface 45 contacts surface 57, then mechanical pressure is applied to the outer surface of panel 33 for compressing peform 53 during curing of the adhesive.

When fabricating preform 53, thickness t may be increased to 0·635cm (1/4") or beyond and may involve the use of thicker fibers. However, the weight of the extra adhesive used in a thicker preform would likely mean that thicker preforms would be reserved for applications where minimization of weight is not a primary concern, for example, in construction of boats.

FIG. 4 illustrates a second assembly using preform 53 to connect panel 33 to a cured woven preform 59. T-shaped preform 59 has a base 61 and a generally perpendicular leg 63 extending from base 61. Preform 59 is connected to spar 35 with fastener 65, which may be of any appropriate type, or preform 59 may be bonded to spar 35. Prior to curing of preform 59, z-pins 67 are inserted into base 61 through bonding surface 69 in a desired pattern having a selected areal density, the pattern and density preferably being approximately the same as those for z-pins 37 in panel 33. As in the previously described assembly, the multi-layered, rectangular cross-section of preform 53 allows for a larger dimensional tolerance between panel 33 and preform 59.

During assembly, panel 33 and preform 59 are fabricated to desired dimensions and shapes, then z-pins 37, 67 are inserted prior to curing of panel 33 and preform 59. Preform 59 is fastened to spar 35 using fastener 65. Preform 53 is fabricated to have a selected thickness t, then infused with an adhesive. Preform 53 is positioned between panel 33 and base 61, then panel 33 is moved toward preform 59, with z-pins 37, 67 penetrating preform 53. Panel 33 is moved toward preform 59 until surface 39 contacts surface 55 of preform 53 and surface 69 contacts surface 57, then mechanical pressure is applied to the outer surface of panel 33 for compressing preform 53.

The advantages of the present invention include the increased strength from the addition of z-pins in the bond area and using an adhesive, rather than a resin, within a 3-D woven preform used to connect components. Another advantage is the reduction of steps needed to complete the assembly. By infusing the adhesive into preforms, pieces can be joined without the need for a separate adhesive film being inserted between a resin-infused connector and the pieces to be joined. Also, the thickness of the preform allows for a larger dimensional tolerance at the bond line, while providing the strength of fiber-reinforced adhesive.

## Claims

1. A method for bonding a first component to a second component, the method comprising:
(a) providing each of the components with a bonding surface having a plurality of z-pins extending therefrom;
(b) providing an adhesive preform having a selected thickness, the adhesive preform being formed of fibers woven in a three-dimensional weave pattern;
(c) infusing the adhesive preform with an adhesive;
(d) assembling the adhesive preform and the first component, a first surface of the adhesive preform contacting the bonding surface of the first component, the z-pins of the first component penetrating the adhesive preform through the first surface;
(e) assembling the adhesive preform and the second component, a second surface of the adhesive preform contacting the bonding surface of the second component, the z-pins of the second component penetrating the adhesive preform through the second surface; and
(f) curing the adhesive in the adhesive preform to adhere the first and second components to the adhesive preform and to retain the z-pins within the preform.

2. The method of claim 1, wherein:
the adhesive has a tensile strength less than 44.80 MPa (6500 pounds per square inch psi)

3. The method of claim 1, wherein:
the adhesive has a peel strength greater than 2.68 kg/linear cm (15 pounds per linear inch.)

4. The method of claim 1, wherein:
step (e) comprises applying mechanical pressure during curing.

5. The method of claim 1, wherein:
the adhesive preform is free of resin.

6. The method of claim 1, wherein:
the adhesive preform has a rectangular cross-section.

7. The method of claim 1, wherein:
the adhesive preform has a thickness of at least two textile layers.

8. The method of claim 1, wherein:
the second component comprises a structural member and a resin-infused preform formed of fibers woven in a three-dimensional weave pattern; and the method further comprising
inserting the z-pins of the second component into the resin-infused preform.

9. The method of claim 1, wherein:
the second component comprises a structural member and a resin-infused preform formed of fibers woven in a three-dimensional weave pattern; and the method further comprising
inserting the z-pins of the second component into the resin-infused preform; and
joining the resin-infused preform to the structural member.

10. The method of claim 1, wherein:
the second component comprises a structural member and a resin-infused preform formed of fibers woven in a three-dimensional weave pattern; and the method further comprising
inserting the z-pins of the second component into the resin-infused preform; and
bonding the resin-infused preform to the structural member during curing of the resin-infused preform.

11. A structural joint, comprising:
a first component having a bonding surface and a plurality of z-pins extending from the bonding surface;
a second component having a bonding surface and a plurality of z-pins extending from the bonding surface;
an adhesive preform having a selected thickness, the adhesive preform being formed of fibers woven in a three-dimensional weave pattern and infused with an adhesive; and wherein
the adhesive preform is adhered to the first component using the adhesive in the adhesive preform, a first surface of the adhesive preform being adjacent the bonding surface of the first component, the z-pins of the first component extending into the adhesive preform through the first surface; and
the adhesive preform is adhered to the second component using the adhesive in the adhesive preform, a second surface of the adhesive preform being adjacent the bonding surface of the second component, the z-pins of the second component extending into the adhesive preform through the first surface.

12. The joint of claim 11, wherein:
the adhesive preform is free of resin.

13. The joint of claim 11, wherein:
the adhesive preform has a rectangular cross-section.

14. The joint of claim 11, wherein:
the adhesive preform has a thickness of at least two textile layers.

15. The joint of claim 11, wherein:
the second component comprises a structural member and a resin-infused preform formed of fibers woven in a three-dimensional weave pattern, the z-pins of the second component being inserted into the resin-infused preform.

16. The joint of claim 11, wherein:
the second component comprises a structural member and a resin-infused preform formed of fibers woven in a three-dimensional weave pattern, the z-pins of the second component being inserted into the resin-infused preform; and
the resin-infused preform is fastened to the structural member after curing of the resin-infused preform.

17. The joint of claim 11, wherein:
the second component comprises a structural member and a resin-infused preform formed of fibers woven in a three-dimensional weave pattern, the z-pins of the second component being inserted into the resin-infused preform; and ;
the resin-infused preform is bonded to the structural member during curing of the resin-infused preform.

## Patentansprüche

1. Verfahren zum Binden eines ersten Bauteils an ein zweites Bauteil, wobei das Verfahren Folgendes umfasst:
(a) Versehen jedes der Bauteile mit einer Verbindungsfläche, die mehrere Z-Stifte hat, die sich von derselben aus erstrecken,
(b) Bereitstellen eines Klebstoff-Vorformlings, der eine ausgewählte Dicke hat, wobei der Klcbstoff-Vorformling aus Fasern geformt ist, die in einem dreidimensionalen Bindungsbild verwebt sind,
(c) Durchtränken des Klebstoff-Vorformlings mit einem Klebstoff,
(d) Zusammenbauen des Klebstoff-Vorformlings und des ersten Bauteils, wobei eine erste Oberfläche des Klebstoff-Vorformlings die Verbindungsfläche des ersten Bauteils berührt, wobei die Z-Stifte des ersten Bauteils durch die erste Oberfläche den Klebstoff-Vorformling durchdringen,
(e) Zusammenbauen des Klebstoff-Vorformlings und des zweiten Bauteils, wobei eine zweite Oberfläche des Klebstoff-Vorformlings die Verbindungsfläche des zweiten Bauteils berührt, wobei die Z-Stifte des zweiten Bauteils durch die zweite Oberfläche den Klebstoff-Vorformling durchdringen, und
(f) Aushärten des Klebstoffs in dem Klebstoff-Vorformling, um das erste und das zweite Bauteil an den Klebstoff-Vorformling zu kleben und die Z-Stifte innerhalb des Vorformlings festzuhalten.

2. Verfahren nach Anspruch 1, wobei:
der Klebstoff eine Zugfestigkeit von weniger als 44.82 Mpa (6500 Pfund pro Quadratzoll/psi) hat.

3. Verfahren nach Anspruch 1, wobei:
der Klebstoff ein Haftvermögen von mehr als 2,68 kg/cm (15 Pfund pro Zoll) hat.

4. Verfahren nach Anspruch 1, wobei:
Schritt (e) umfasst, während des Aushärtens mechanischen Druck auszuüben.

5. Verfahren nach Anspruch 1, wobei:
der Klebstoff-Vorformling frei von Harz ist.

6. Verfahren nach Anspruch 1, wobei:
der Klebstoff-Vorformling einen rechteckigen Querschnitt hat.

7. Verfahren nach Anspruch 1, wobei:
der Klcbstoff-Vorformling eine Dicke von wenigstens zwei Textillagen hat.

8. Verfahren nach Anspruch 1, wobei:
das zweite Bauteil ein Strukturelement und einen harzdurchtränkten Vorformling, der aus Fasern geformt ist, die in einem dreidimensionalen Bindungsbild verwebt sind, umfasst und das Verfahren ferner umfasst,
die Z-Stifte des zweiten Bauteils in den harzdurchtränkten Vorformling einzusetzen.

9. Verfahren nach Anspruch 1, wobei:
das zweite Bauteil ein Strukturelement und einen harzdurchtränkten Vorformling, der aus Fasern geformt ist, die in einem dreidimensionalen Bindungsbild verwebt sind, umfasst und das Verfahren ferner umfasst,
die Z-Stifte des zweiten Bauteils in den harzdurchtränkten Vorformling einzusetzen und
den harzdurchtränkten Vorformling mit dem Strukturelement zu verbinden.

10. Verfahren nach Anspruch 1, wobei:
das zweite Bauteil ein Strukturelement und einen harzdurchtränkten Vorformling, der aus Fasern geformt ist, die in einem dreidimensionalen Bindungsbild verwebt sind, umfasst und das Verfahren ferner umfasst,
die Z-Stifte des zweiten Bauteils in den harzdurchtränkten Vorformling einzusetzen und
den harzdurchtränkten Vorformling während des Aushärtens des harzdurchtränkten Vorformlings an das Strukturelement zu binden.

11. Strukturverbindung, die Folgendes umfasst:
ein erstes Bauteil, das eine Verbindungsfläche und mehrere Z-Stifte hat, die sich von der Verbindungsfläche aus erstrecken,
ein zweites Bauteil, das eine Verbindungsfläche und mehrere Z-Stifte hat, die sich von der Verbindungsfläche aus erstrecken,
einen Klebstoff-Vorformling, der eine ausgewählte Dicke hat, wobei der Klebstoff-Vorformling aus Fasern geformt ist, die in einem dreidimensionalen Bindungsbild verwebt sind, und wobei
der Klebstoff-Vorformling unter Verwendung des Klebstoffs in dem Klebstoff-Vorformling an das erste Bauteil geklebt wird, wobei eine erste Oberfläche des Klebstoff-Vorfomlings an die Verbindungsfläche des ersten Bauteils grenzt, wobei sich die Z-Stiftc des ersten Bauteils durch die erste Oberfläche in den Klebstoff-Vorformling erstrecken, und
der Klebstoff-Vorformling unter Verwendung des Klebstoffs in dem Klebstoff-Vorformling an das zweite Bauteil geklebt wird, wobei eine zweite Oberfläche des Klebstoff-Vorformlings an die Verbindungsfläche des zweiten Bauteils grenzt, wobei sich die Z-Stifte des zweiten Bauteils durch die zweite Oberfläche in den Klebstoff-Vorformling erstrecken.

12. Verbindung nach Anspruch 11, wobei:
der Klebstoff-Vorformling frei von Harz ist.

13. Verbindung nach Anspruch 11, wobei:
der Klebstoff-Vorformling einen rechteckigen Querschnitt hat.

14. Verbindung nach Anspruch 11, wobei:
der Klebstoff-Vorformling eine Dicke von wenigstens zwei Textillagen hat.

15. Verbindung nach Anspruch 11, wobei:
das zweite Bauteil ein Strukturelement und einen harzdurchtränkten Vorformling, der aus Fasern geformt ist, die in einem dreidimensionalen Bindungsbild verwebt sind, umfasst, wobei die Z-Stifte des zweiten Bauteils in den harzdurchtränkten Vorformling eingesetzt werden.

16. Verbindung nach Anspruch 11, wobei:
das zweite Bauteil ein Strukturelement und einen harzdurchtränkten Vorformling, der aus Fasern geformt ist, die in einem dreidimensionalen Bindungsbild verwebt sind, umfasst, wobei die Z-Stifte des zweiten Bauteils in den harzdurchtränkten Vorformling eingesetzt werden, und
der harzdurchtränkte Vorformling nach dem Aushärten des harzdurchtränkten Vorformlings an dem Strukturelement befestigt wird.

17. Verbindung nach Anspruch 11, wobei;
das zweite Bauteil ein Strukturelement und einen harzdurchtränkten Vorformling, der aus Fasern geformt ist, die in einem dreidimensionalen Bindungsbild verwebt sind, umfasst, wobei die Z-Stifte des zweiten Bauteils in den harzdurchtränkten Vorformling eingesetzt werden, und
der harzdurchtränkte Vorformling während des Aushärtens des harzdurchtränkten Vorformlings an das Strukturelement gebunden wird.

## Revendications

1. Procédé de liaison d'un premier composant à un deuxième composant, le procédé comprenant les étapes ci-dessous:
(a) équipement de chacun, des composants d'une surface de liaison comportant plusieurs broches en Z s'étendant à partir de celle-ci;
(b) fourniture d'une préforme adhésive ayant une épaisseur sélectionnée, la préforme adhésive étant formée de fibres tissées dans un motif d'armure tridimensionnel;
(c) infusion de la préforme adhésive d'un adhésif;
(d) assemblage de la préforme adhésive et du premier composant, une première surface de la préforme adhésive contactant la surface de liaison du premier composant, les broches en Z du premier composant pénétrant dans la préforme adhésive à travers la première surface;
(e) assemblage de la préforme adhésive et du deuxième composant, une deuxième surface de la préforme adhésive contactant la surface de liaison du deuxième composant, les broches en Z du deuxième composant pénétrant dans la préforme adhésive à travers la deuxième surface; et
(f) durcissement de l'adhésif dans la préforme adhésive pour faire adhérer les premier et deuxième composants à la préforme adhésive et pour retenir les broches en Z dans la préforme.

2. Procédé selon la revendication 1, dans lequel
l'adhésif présente une résistance à la traction inférieure à 44,82 MPa (6500 livres par pouce carré (psi)).

3. Procédé selon la revendication 1, dans lequel:
l'adhésif présente une résistance au pelage supérieure à 2,68 kg/cm linéaire (15 livres par pouce linéaire).

4. Procédé selon la revendication 1, dans lequel:
l'étape (e) comprend l'application d'une pression mécanique au cours du durcissement.

5. Procédé selon la revendication 1, dans lequel:
la préforme adhésive est exempte de résine.

6. Procédé selon la revendication 1, dans lequel:
la préforme adhésive a une section transversale rectangulaire.

7. Procédé selon la revendication 1, dans lequel:
la préforme adhésive a une épaisseur correspondant à au moins deux couches textiles.

8. Procédé selon la revendication 1, dans lequel:
le deuxième composant comprend un élément structural et une préforme infusée de résine, formée de fibres tissées dans un motif d'armure tridimensionnel: le procédé comprenant en outre l'étape ci-dessous:
insertion des broches en Z du deuxième composant dans la préforme infusée de résine.

9. Procédé selon la revendication 1, dans lequel:
le deuxième composant comprend un élément structural et une préforme infusée de résine formée de fibres tissées dans un motif d'armure tridimensionnel: et le procédé comprenant en outre les étapes ci-dessous:
insertion des broches en Z du deuxième composant dans la préforme infusée de résine: et
liaison de la préforme infusée de résine à l'élément structural.

10. Procédé selon la revendication 1, dans lequel:
le deuxième composant comprend un élément structural et une préforme infusée de résine formée de fibres tissées dans un motif d'armure tridimensionnel; et le procédé comprenant en outre les étapes ci-dessous:
insertion des broches en Z du deuxième composant dans la préforme infusée de résine; et
liaison de la préforme infusée de résine à l'élément structural au cours de durcissement de la préforme infusée de résine.

11. Joint structural, comprenant:
un premier composant comportant une surface de liaison et plusieurs broches en Z s'étendant à partir de la surface de liaison;
un deuxième composant comportant une surface de liaison et plusieurs broches en Z s'étendant à partir de la surface de liaison;
une préforme adhésive ayant une épaisseur sélectionnée, la préforme adhésive étant formée de fibres tissées dans un motif d'armure tridimensionnel et étant infusée d'un adhésif, et dans lequel
la préforme adhésive est adhérée au premier composant par l'intermédiaire de l'adhésif dans la préforme adhésive, une première surface de la préforme adhésive étant adjacente à la surface de liaison du premier composant, les broches en Z du premier composant s'étendant dans la préforme adhésive à travers la première surface; et
la préforme adhésive étant adhérée au deuxième composant par l'intermédiaire de l'adhésif dans la préforme adhésive, une deuxième surface de la préforme adhésive étant adjacente à la surface de liaison du deuxième composant, les broches en Z du deuxième composant s'étendant dans la préforme adhésive à travers la première surface.

12. Joint selon la revendication 11, dans lequel:
la préforme adhésive est exempte de résine.

13. Joint selon la revendication 1, dans lequel:
la préforme adhésive a une section transversale rectangulaire.

14. Joint selon la revendication 11, dans lequel:
la préforme adhésive a une épaisseur d'au moins deux couches textiles.

15. Joint selon la revendication 11, dans lequel:
le deuxième composant comprend un élément structural et une préforme infusée de résine formée de fibres tissées dans un motif d'armure tridimensionnel, les broches en Z du deuxième composant étant insérées dans la préforme infusée de résine.

16. Joint selon la revendication 11, dans lequel:
le deuxième composant comprend un élément structural et une préforme infusée de résine formée de fibres tissées dans un motif d'armure tridimensionnel, les broches en Z du deuxième composant étant insérées dans 1a préforme infusée de résine; et
la préforme infusée de résine étant fixée sur l'élément structural après le durcissement de la préforme infusée de résine.

17. Joint selon la revendication 11, dans lequel:
le deuxième composant comprend un élément structural et une préforme infusée de résine formée de fibres tissées dans un motif d'armure tridimensionnel, les broches en Z du deuxième composant étant insérées dans la préforme infusée de résine; et
la préforme infusée de résine étant liée à l'élément structural au cours du durcissement de la préforme infusée de résine.
